# EUROPEAN PATENT SPECIFICATION

(11) **EP 4 013 646 B1**
(45) Date of publication and mention of the grant of the patent: **04.03.2026**
(21) Application number: 20853488.3
(22) Date of filing: 12.06.2020
(51) Int. Cl.: B60P 1/64, B60P 1/48, B65D 88/12, B65D 88/02, B65D 90/00, B65D 90/16, B65D 90/18

(54) **LOAD UNIT ARRANGEMENT FOR CONNECTING AND DISCONNECTING LOAD UNITS OF THE LOAD UNIT ARRANGEMENT**
LADEEINHEITSANORDNUNG ZUM EIN- UND AUSSCHALTEN VON LADEEINHEITEN DER LADEEINHEITSANORDNUNG
AGENCEMENT D'UNITÉ DE CHARGE PERMETTANT DE CONNECTER ET DE DÉCONNECTER DES UNITÉS DE CHARGE DE L'AGENCEMENT D'UNITÉ DE CHARGE

(30) Priority: 12.08.2019 FI 20195669
(43) Date of publication of application: 22.06.2022
(73) Proprietor: Lotus Demolition Oy, 01740 Vantaa (FI)
(72) Inventor: LEPPIAHO, Tommi, 20720 TURKU (FI)
(74) Representative: Berggren Oy
(86) International application number: PCT/FI2020/050416
(87) International publication number: WO 2021/028611

(56) References cited:
- WO-A1-2019/220019
- WO-A2-2017/182719
- DE-A1- 3 922 813
- FI-A1- 20 185 455
- FI-B- 127 896
- US-A- 3 197 054
- US-A- 3 716 157
- US-A- 3 716 157
- US-A- 5 085 448
- US-A- 5 085 448

## Description

### TECHNICAL FIELD OF THE INVENTION

The invention relates to a load unit arrangement having first and second load units to be carried by a vehicle, such as by a truck. In particularly the invention relates to a load unit arrangement, where the first and second load units can be moved in relation to each other and thereby connect or disconnect the load units.

### BACKGROUND OF THE INVENTION

It is known to transport a skip or interchangeable load unit by a vehicle, such as a truck, unload or remove the load unit off the vehicle and then load another load unit to the vehicle. It is also known to transport a load system having first and second load units connected to each other, so loaded them on the top of each other.

FI20185455A1 describes an elongated guiding member, which is fixed to an upper portion of a first end of a second load unit. The free end of the elongated guiding member is protruded outside and downward direction so it locates lower level than another first end of the elongated guiding member. When connecting the load units the free end of the elongated guiding member receives a second guiding member of the second end of the first load unit, when the first load unit is moved towards the second load unit, and thereby guides the second end of the first load unit upwards along the elongated guiding member and towards to the upper portion of the first end of the second load unit.

WO2017/182719A2 describes an arrangement for interchanging at least first and second load units by a landing device. The landing device is arranged between a first end of the first load unit and a second end of the second load unit so that a first portion of the landing device is supported to the first end of the first load unit and a second portion of said landing device is supported to the second end of the second load unit. The landing device is configured to move said first end of said first load unit into the lower lever than the second end of the second load unit after said first end of the first load unit has met said second end of the second load unit.

However, the problem there is to connect and, especially, to disconnect the load units, so to take the upper load unit away from the top of the bottom load unit and lowering the upper load unit to the ground or other supporting level in an easy, safe and controlled way. Often a space needed for the connecting or disconnecting is large, at least three or more times of the length of the load unit and the vehicle, because the load units and vehicle should be arranged sequentially into the ground. In addition, the systems need often remarkable, complex or expensive modifications for arrangement, which is tailored for connecting and disconnecting the load units. Typical modifications contain for example lifts or cranes. Moreover the problem is to keep the ends of the load units in a certain distance from each other during the lowering or lifting or disconnecting the load units, especially when the connecting and disconnecting is done by sliding the load units, so that the ends of the load units would not get tangled up with each other and in addition to ensure, that the upper load unit does not slide in an uncontrolled manner during the disconnecting. Further, when the disconnecting is performed by sliding the upper load units away, the problems is to do this in controlled manner so that the slidable load unit would not slide in an uncontrolled and thus in an unsafe way.

### SUMMARY OF THE INVENTION

An object of the invention is to alleviate and eliminate the problems relating to the known prior art. Especially the object of the invention is to provide an arrangement and method for connecting and disconnecting the load units, so that the load unit can be lifted and guided over the load unit lying in the ground and vice versa so that the upper load unit can be moved away from the top of the bottom load unit and lowered to the ground or the like in an easy, safe and controlled manner and in addition so that the space needed for the connecting or disconnecting is minimized. In addition, one object is to minimize modifications for the existing systems so to provide the arrangement of the invention to the already existing systems, such as load units and trucks, such as to provide a one system for both connecting and disconnecting.

The object of the invention can be achieved by the features of independent claims.

The invention relates to an arrangement for connecting and disconnecting at least two load units according to claim 1. In addition, the invention relates to a method for connecting and disconnecting at least two load units according to claim 19.

According to an embodiment of the invention a load unit arrangement is provided, where the load unit arrangement comprises at least first and second load units to be carried by a vehicle, such as by a truck or the like. Both the load units have first and second ends so the front ends and the rear ends. The load units are configured to move in relation to each other and in particularly so that the load unit to be connected or disconnected (moving in/on top of another load unit) is configured to move in a first longitudinal direction to connected or disconnect the load units. It is to be noted that the load units are configured to be connected by moving the top load unit in relation to bottom load unit in said same first longitudinal direction, as is illustrated in more details elsewhere in this document.

The first longitudinal direction is essentially parallel with a longitudinal axis of the load units (at least at the beginning of the disconnecting and at the final stage of the connecting, so when the load units are mostly on top of each other). Advantageously the load units are slid in relation to each other when they are moved in relation to each other so that there is a physical contact between the load units.

According to an embodiment the arrangement comprises a guiding device, which is arranged between the first end of the first load unit and the second end of the second load unit. The guiding device comprises a first arm with first and second ends and second arm with first and second ends. The second ends of the first and second arms are advantageously connected to each other or at least their extensions intersect each other. The first end of the first arm is coupled to a lower portion of the first load unit, and the first end of the second arm is coupled to an upper portion of the first load unit.

The first arm is advantageously in a first angle in relation to the longitudinal axis of the first load unit and is arranged so that it moves or slides against the second end of the second load unit when the first end of the first load unit meets and overpasses the second end of the second load unit. In this way the first arm guides and lowers the first end of the first load unit towards to ground or other surface in relation to the second end of the second load unit and disconnects the load units.

The second arm of the guiding device is in a second angle in relation to the longitudinal axis of the first load unit and is arranged so that it enables the second end of the second load unit to move or slide along the second arm when the second end of the second load unit meets said first end of the first load unit. In this way the second arm lifts and guides the second end of the second load unit over the first end of the first load unit in order to connect the load units, when the first load unit is moved in said first direction.

According to an advantageous embodiment the guiding device is coupled to the first end of the first load unit. Still, the guiding device is advantageously coupled to the guiding device or to the first end of the first load unit pivotally via a hinge, so that the guiding device can be turned around the hinge between first and second positions, i.e. closed and open positions, wherein in said second (open) position the guiding device is configured to enable the connecting and disconnecting of said load units. In turn, in said first (closed) position the guiding device is turned into a transport position where is takes minimally space. The arrangement advantageously comprises a locking mechanism for locking the guiding device into the first and/or second positions.

In addition, according to an embodiment, the guiding device comprises a braking device for braking the moving of the first load unit in relation to said second load unit during disconnection so when the first load unit is on the top of the second load unit and is moved in said first direction, and in particularly when the first end of the first load unit meets and overpasses the second end of the second load unit. The braking device comprising an elongated body having first and second ends, said first end being a free end. The first end of the elongated body is configured to extend over the first arm so to be supported to the second end portion of the second load unit when the first end of the first load unit meets and overpasses the second end of the second load unit during disconnecting. During this, also the first arm is supported in a slidable manner against the second end of the second load unit. The second end portion may be e.g. a tailgate or other edge portion at the second end of the second load unit or a counterpart portion dedicated for receiving the first end of the elongated body.

The braking device is advantageously configured to allow a turning of the first end of the elongated body around the hinge in a braking manner so that the braking device thereby brakes the moving of the first load unit in relation to said second load unit in said first direction and/or when lowering the first end of the first load unit in relation to the second end of the second load unit. Advantageously the turning of the first end of the elongated body happens when the first end of the first load unit meets the second end of the second load unit and the first end of the elongated body meets and touches the second end of the second load unit. The second load unit may comprise a counter part portion to receive and capture the first end of the elongated body during moving. The part portion locates advantageously in the second end portion of the second load unit.

When the first unit is still moved in said first direction and lowered in relation to the second end of the second load unit, the angle of the elongated body reaches a threshold angle, whereupon the first end of the elongated body does not reach the second end of the second load unit (or the counter portion) anymore, whereupon the first end of the elongated body is released from the second end of the second load unit. Advantageously the angle can be adjusted e.g. by the length of elongated body (or length of the first end of the elongated body), whereupon the releasing happens when the first end of the first load unit has overpassed the second end of the second load unit and has been lowered enough in relation to the second end of the second load unit, advantageously into the ground. It is to be noted that when the first load unit is moved into said first direction and away from the top of the second load unit, the first end of the second load unit is lifted up, whereupon the upper portion of the second end of the second load unit is lowered. Therefore, when the first end of the first load unit is lowered e.g. in the ground level, the first end of the elongated body might still reach and touch the second end of the second load unit. However, when the first end of the second load unit is then lowered, and at the same the second end of the second load unit lifted, either the angle of the elongated body changes and releases the elongated body, or the distance between the second end of the second load unit and the first end of the elongated body increases so that the first end of the elongated body cannot reach the second end of the second load unit anymore and thus gets released.

According to an advantageous embodiment the braking device comprises a resistance element for resisting and braking a free movement of the first end of the elongated body around the hinge, and thus also brakes the free sliding movement of the first load unit in relation to the second load unit. The resistance element is e.g. as a spring or cylinder, but is not limited to those only and can be implemented also by any other systems know by the skilled person of braking mechanisms. Advantageously the resistance element is arranged between second arm of the guiding device of the and the elongated body. In addition, resistance force of the element is advantageously adjustable.

The present invention offers advantages over the known prior art, such as enables very easy, simple and fast way to disconnect or connect the load units, because the load unit to be connected or disconnected must just be slid in said first direction so that the end (either the first or second end, depending whether it is to be connected or disconnected) of it travels along the guiding device. In addition, the arrangement according to the invention enables automatic braking system when disconnecting the load units, where the braking device is automatically coupled with the second end portion of the second load unit and so to brake and limit the free movement of the first load unit, as well as automatic releasing system for releasing the braking device when the first end of the first load unit is landed.

Moreover, the present invention offers safe arrangement for connecting and disconnecting the load units, so to take the upper load unit away from the top of the bottom load unit by sliding and lowering the upper load to the ground in a controlled manner. In addition, the space needed for the connecting or disconnecting can be minimized by the current invention. Furthermore, also modifications needed for the already existing systems, such as load units and trucks, are minimized so that only few non-expensive and very light components, such as bars (first and second arms modified as discussed elsewhere in this document), are needed to achieve the technical effects of the current invention for disconnecting and connecting the load units.

The exemplary embodiments presented in this text are not to be interpreted to pose limitations to the applicability of the appended claims. The verb "to comprise" is used in this text as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific example embodiments when read in connection with the accompanying drawings.

### BRIEF DESCRIPTION OF THE DRAWINGS

Next the invention will be described in greater detail with reference to exemplary embodiments in accordance with the accompanying drawings, in which:
- Figures 1-6: illustrate a principle of an exemplary load unit arrangement for connecting first and second load units carried by a vehicle according to an advantageous embodiment of the invention,
- Figures 7-12: illustrate a principle of an exemplary load unit arrangement for disconnecting first and second load units carried by a vehicle according to an advantageous embodiment of the invention,
- Figures 13-16: illustrate a principle of an exemplary braking device according to an advantageous embodiment of the invention,
- Figures 17-20: illustrate a principle of an exemplary load unit arrangement with auxiliary devices according to an advantageous embodiment of the invention,
- Figure 21: illustrates an example of a first arm having a braking element according to an advantageous embodiment of the invention, and
- Figures 22-33: illustrate a principle of an exemplary load unit arrangement with a supporting device for supporting the second end of the first load unit to the ground or other supporting surface according to an advantageous embodiment of the invention.

### DETAILED DESCRIPTION

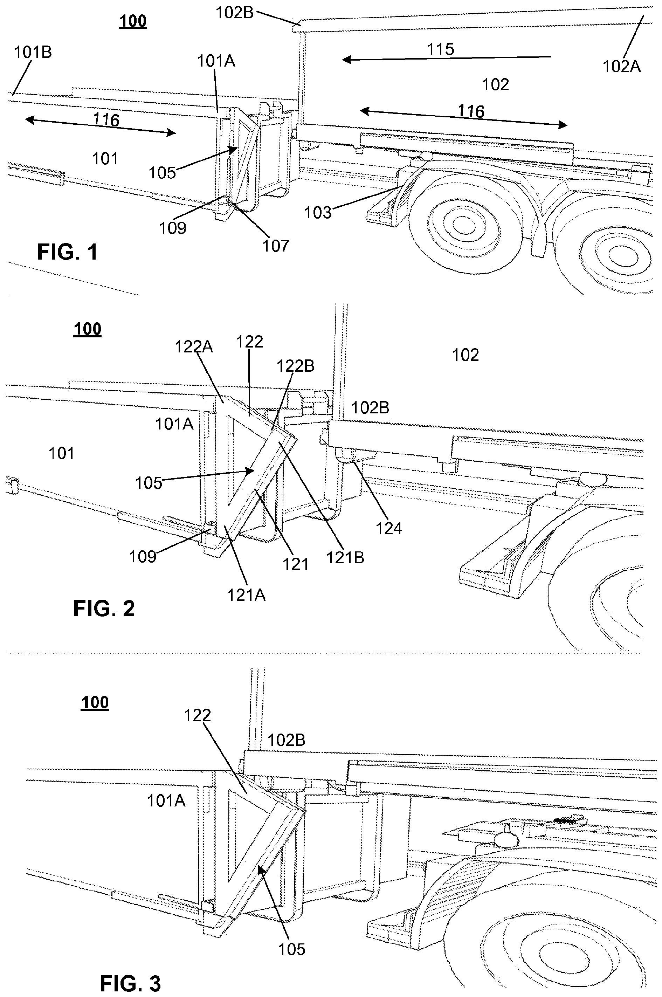

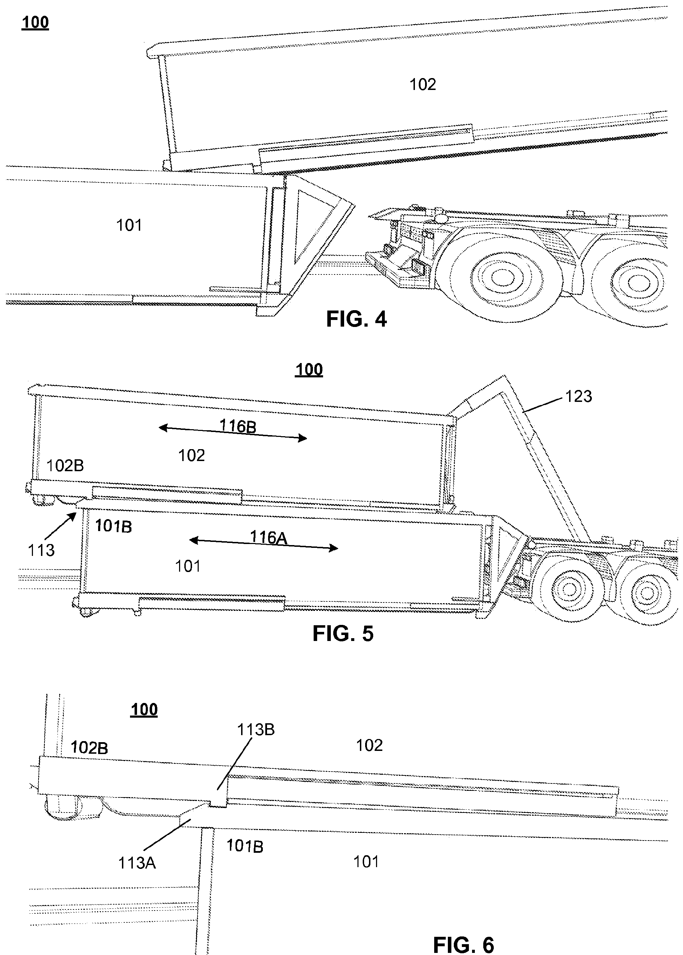

Figures 1-6 illustrate a principle of an exemplary load unit arrangement 100 for connecting first and second load units 101, 102 carried by a vehicle 103, according to an advantageous embodiment of the invention. Both the load units have first and second ends 101A, 101B, 102A, 102B, i.e. the front ends 101A, 102A and the rear ends 101B, 102B. The load units 101, 102 are configured to move in relation to each other and in particularly so that the second load unit 102 carried by the vehicle (Figs 1-6) is configured to move in a first longitudinal direction 115 to connect the load units, so to transfer the second load unit 102 to the top of the first load unit 101, said first load unit 101 typically lying on the ground or the like surface. Said first direction 115 is essentially parallel with the longitudinal axis 116 of the load units 101, 102 at least at the beginning of the disconnecting and at the final stage of the connecting, so when the load units are mostly on top of each other, as can be understood from the Figures. Due to a track of the hook system 123 it is to ne noted that during the disconnecting and connecting the mutual angle of the first longitudinal direction 115 and longitudinal axis 116 of the load units 101, 102 might be deviated from parallel, as can be seen e.g. in Figure 4 and 5.

The arrangement comprises also a guiding device 105, which is arranged between the first end 101A of the first load unit 101 and the second end 102B of the second load unit 102. As is illustrated in Figures, the guiding device 105 is advantageously coupled to the first end 101A of the first load unit 101. The guiding device 105 comprises a first arm 121 with first and second ends 121A, 121B and second arm 122 with first and second ends 122A, 122B. The second ends 121B, 122B of the first and second arms 121, 122 are advantageously connected to each other. The first end 121A of the first arm 121 is coupled to a lower portion of the first load unit 101, and the first end 122A of the second arm 122 is coupled to an upper portion of the first load unit 101.

The guiding device 105 is coupled to the first end 101A of the first load unit 101 advantageously pivotally via a hinge 107, so that the guiding device 105 can be turned around the hinge 107 between first and second, i.e. closed and open positions. In Figure 1 the guiding device 105 is a first or closed position, which is convenient for transportation of the load units, and e.g. in Figure 2 in the second or open position, which is for connecting and disconnecting the load units. The guiding device 105 advantageously comprises also a locking mechanism 109 for locking the guiding device 105 in to the first and/or second positions. The locking mechanism 109 can be implemented e.g. by a rod having suitable holes and pins, or by latch and corresponding slots or other suitable systems known by the skilled person.

The second arm 122 is in a second angle in relation to the longitudinal axis 116 of the first load unit 101 in the open position. As can be seen e.g. in Figures 2-3, the second arm is arranged so that it enables the second end 102B of the second load unit 102 move or slide along the second arm 122 when the second end 102B of the second load unit 102 is moved into the first direction 115, typically by the vehicle 103, and towards the first end 101A of the first load unit 101. Advantageously the second end 122B of the second arm 122 extends below the upper portion of the first end 101A of the first load unit 101 and also below the second end 102B of the second load unit 102, and in addition the first end 122A of the second arm extend at least to the level of the upper portion of the first end 101A of the first load unit 101, so that the second arm 122 can lift and guide the second end 102B of the second load unit 102 over the edge of the first end 101A of the first load unit 101 and in this way enable the second load unit to slide over the first load unit 101 and thereby to connect the load units 101, 102.

The second end 102B of the second load unit 102 may have a slide or roll 124 or the like, which helps the sliding of the second end 102B of the second load unit 102 along the second arm 122. The second arm 122 can also be used for dragging the upper (second) load unit 102 for example back to the vehicle 103, such as on top of the truck. Typically, the frame of the truck is in a lower level than the upper portion of the first load unit 101 locating on the ground (next to the rear portion of the truck), whereupon when the second load unit 102 locating on the top of the first load unit 101 locating on the ground is loaded back on the truck (so to the opposite direction that said first direction 115), it can be guided and lowered in a controlled and smooth manner by the second arm 122 of the guiding device. Thus, the second arm 122 can help both the moving the second end of the load unit on the top of the first load unit (in said first direction 115) or back to the top of the vehicle (opposite to said first direction 115).

When the second end 102B of the second load unit 102 is moved on the top of the first end 101A of the first load unit 101, the rest of the movement of the second load unit 102 can be done by the hook system 123 of the vehicle 103, which is coupled to the first end 102A of the second load unit 102 (see Fig 5).

The arrangement 100 comprises advantageously also a stopping arrangement 113, which is configured to prevent the mutual movement of the first and second load units 101, 102 in said first direction 115, when the longitudinal axis 116A, 116B of the first and second load units are essentially parallel and the second ends 101B, 102B of the load units are essentially on top of each other, so the second load unit 102 is on top of the first one 101 (see e.g. Figures 5-6). The stopping arrangement 113 comprises a first and second protrusion members 113A, 113B, where the first protrusion member 113A is arranged to the second end 101B of the first load unit 101 and the second protrusion member 113B is arranged to the second end 102B of the second load unit 102 so that said first and second protrusion members 113A, 113B are configured to be introduced with each other when the longitudinal axis 116A, 116B of the first and second load units are essentially parallel and when the second load unit 102 is moved enough in the first direction 115 so that the second ends 101B, 102B meet each other and are finally on top of each other.

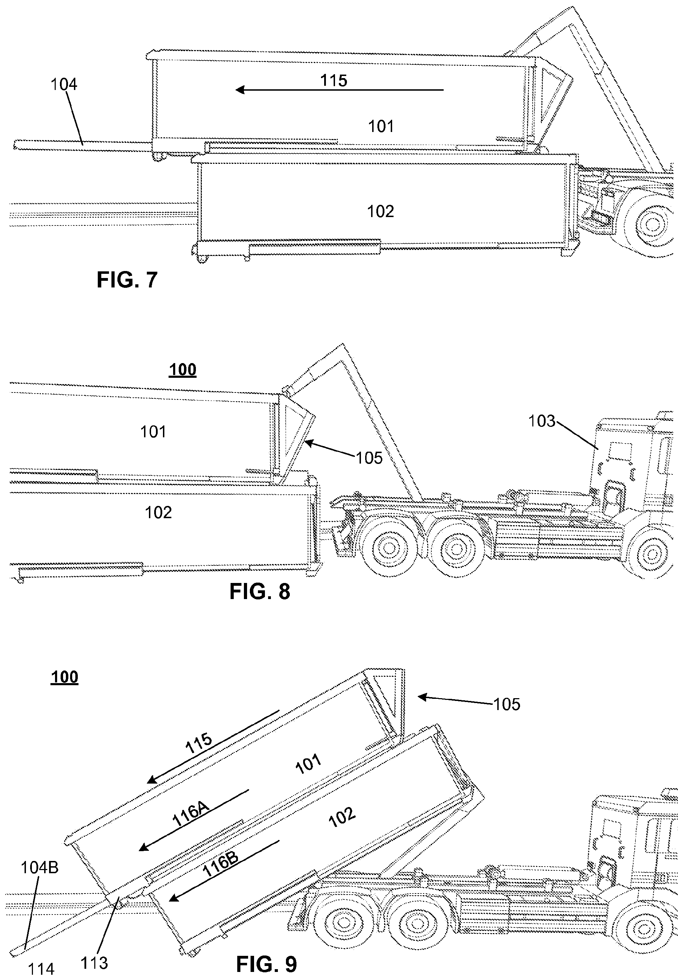

In Figure 7 the first load unit 101 is illustrated on top of the second load unit 102 and in a lock position so that the stopping arrangement 113 prevents the movement of the second load unit backwards, i.e. to the first direction 115. For disconnecting the load units 101, 102, the guiding device 105 is turned into the second or open position, as is described in Figures 7 and 8. In order to disconnect the load units 101, 102, the first end 102A of the second load unit 102 is lifted so that also the first end 101A of the first load unit 101 locating on the top of the second load unit 102 is lofted. The lifting can be done e.g. by the hook system 123 of the vehicle.

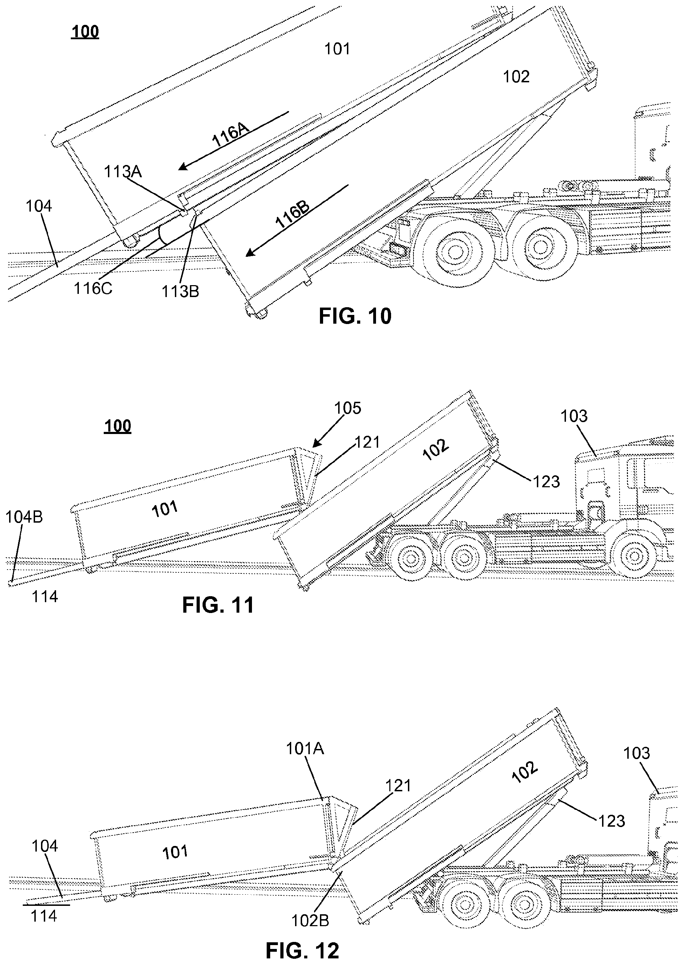

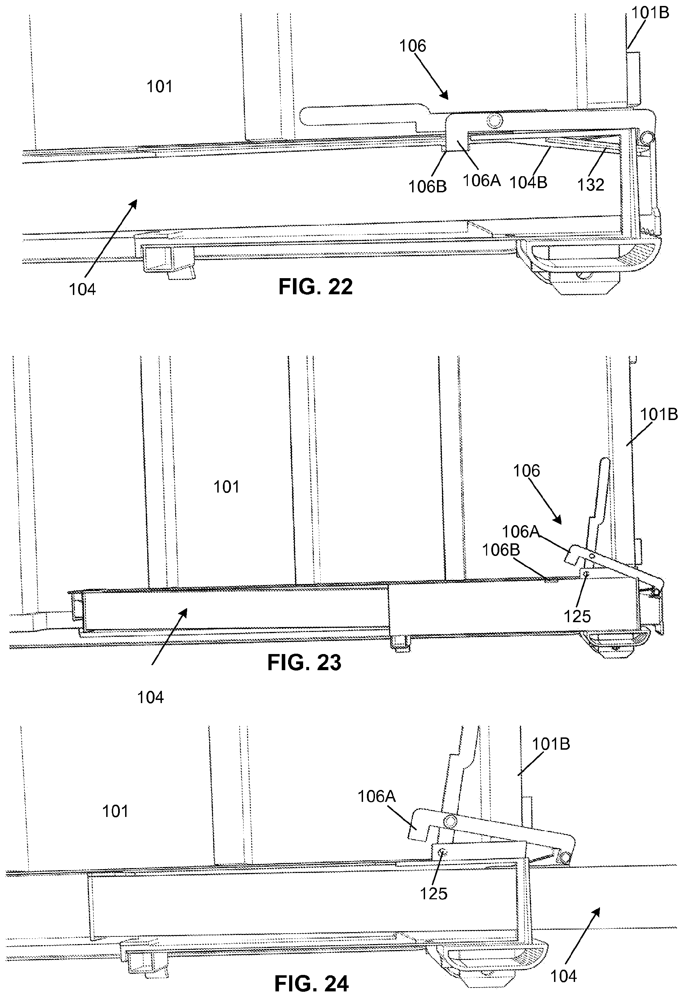

In order to open the locking of the stopping arrangement 113 so that it would allow the movement of the first load units 101 in the direction 115, the mutual angle of the longitudinal axis 116A, 116B of the first and second load units 101, 102 must be increased so that said first and second protrusion members 113A, 113B of the stopping arrangement 113 can be overtake each other. For this, the second end 101B of the first load unit 101 should be supported to the ground 114 (see e.g. Figure 9) so that when the first ends 101A, 102A of the load units 101, 102 are still lifted by the hook system 123 of the vehicle 103 (coupled to the first end 102A of the second load unit 102), the second end 101B of the first load unit 101 will be separated from the second end 102B of the second load unit 102, as is the case in Figure 10, where the mutual angle 116C of the longitudinal axis 116A, 116B of the first and second load units 101, 102 is over a threshold angle enabling the overpass of the first and second protrusion members 113A, 113B of each other. This is because the second end 101B of the first load unit 101 is supported to the ground 114 (or other supporting surface) and another fulcrum or supporting point of the first load unit 101 is the lower portion of the first end 101A, which is faced against the upper portion of the first end 102A of the second load unit 102. In order to make this easier and workable, the first load unit 101 may comprise a supporting device 104, advantageously an elongated supporting device 104 in the second end 101B portion, where the elongated supporting device 104 can be pulled out so that the distal end 104B can extend to the ground 114 and thereby support the second end 101B of the first load unit 101 to the ground (or other supporting surface). Examples of the supporting device 104 are illustrated in more details in Figures 22-33.

When the first end 102A of the second load unit 102 is still lifted and dragged by the hook 123 (so that at least one component of the movement of the second load unit 102 is opposite to said first direction 115), as is the case in Figures 11 and 12, the first load unit 101 will slide over the second load unit 102 into said first direction 115 (this is a mutual movement and in practice the first load unit 101 does not move in relation to the ground, but actually the second load unit 102 is dragged to top of the vehicle 103 by the hook system 123).

It can be seen e.g. in Figures 11 and 12, that the first arm 121 is in a first angle (in an open position) in relation to the longitudinal axis 116 / 116A of the first load unit 101 and is arranged so that it moves or slides against the second end 102B of the second load unit 102 when the first end 101A of the first load unit 101 meets and overpasses the second end 102B of the second load unit 102. In this way the first arm guides and lowers the first end 101A of the first load unit 101 in relation to the second end 102B of the second load unit 102 to the ground 114 or other surface and again disconnects the load units 101, 102.

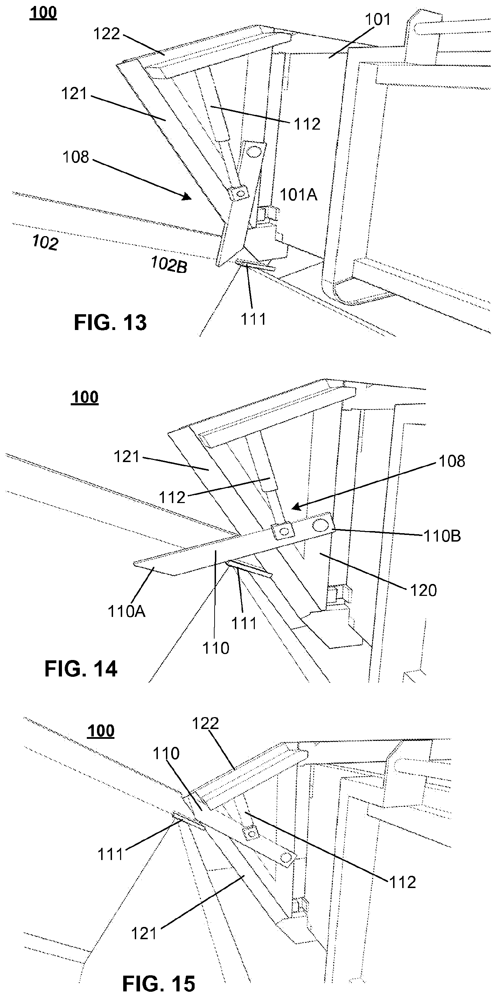

Figures 13-16 illustrate a principle of an exemplary braking device 108, which is advantageously coupled with the guiding device 105. The braking device 108 is used for braking the movement of the first load unit 101 in relation to said second load unit 102 especially during disconnection so when the first end 101A of the first load unit 101 has already meet the second end 102B of the second load unit 102 and is going to overpass the second end 102B and again to move into a lower level in relation to the second load unit 102.

The braking device 108 comprising an elongated body 110 having first and second ends 110A, 110B, said first end 110A being a free end. The first end 110A of the elongated body 110 is configured to extend over the first arm 121 of the guiding device 105 so to be supported to the second end 102B of the second load unit 102 when the first end 101A of the first load unit 101 meets and overpasses the second end 102B of the second load unit 102 during movement and disconnecting, as can be seen in Figure 13. During disconnection and in particularly when the first end 101A of the first load unit 101 is lowered in relation to the second end 102B of the second load unit 102, the first arm 121 moves in a slidable manner against or along the second end 102B of the second load unit 102, whereupon the first end 110A of the elongated body 110 extending over the first arm 121 will be captured by the second end 102B of the second load unit 102.

The elongated body 110 of the braking device 108 is hinged from its second end 110B to the guiding device 105, or to a connecting element 120 connecting the first end 121A of the first arm 121 and the first end 122A of the second arm 122, or to the first end 101A of the first load unit 101 so that it allows a turning of the first end 110A of the elongated body 110 around the hinge in a braking manner, whereupon the braking device 108 thereby brakes the moving of the first load unit 101 in relation to said second load unit 102 in said first direction 115 and/or in downward direction towards the ground 114 when lowering the first end 101A of the first load unit 101 in relation to the second end of the second load unit. Advantageously the turning of the first end 110A of the elongated body 110 happens when the first end 101A of the first load unit 101 meets the second end 102B of the second load unit 102 and the first end 110A of the elongated body 110 meets and touches the second end 102B of the second load unit 102. The second load unit 102 may comprise a counterpart portion 111 to receive and capture the first end 110A of the elongated body 110 during moving. The counterpart portion 111 locates advantageously in the second end (and upper) portion 102B of the second load unit 102.

When the first load unit 101 is still moved in said first direction 115 and lowered towards the ground 114 in relation to the second end 102B of the second load unit 102, the angle of the elongated body 110 reaches a threshold angle, whereupon the first end 110A of the elongated body 110 does not reach the second end 102B of the second load unit 110 (or the counterpart portion 111) anymore, whereupon the first end 110A of the elongated body 110 is released from the second end 102B of the second load unit 102. Advantageously the angle can be adjusted e.g. by the length of elongated body 110 (or length of the first end 110A of the elongated body extending over the first arm 121, which might be adjustable, for example), whereupon the releasing happens when the first end 101A of the first load unit 101 has overpassed the second end 102B of the second load unit 102 and has been lowered towards the ground 114 enough in relation to the second end 102B of the second load unit 102, advantageously into the ground 114. It is to be noted that when the first load unit 101 is moved into said first direction 115 and away from the top of the second load unit 102, the first end 102A of the second load unit 102 is lifted up, whereupon at the same the upper portion of the second end 102B of the second load unit 102 is lowered (the load unit 102 is rigid structure). Therefore, when the first end 101A of the first load unit 101 is lowered e.g. into the ground level 114, the first end 110A of the elongated body 110 might still reach and touch the second end 102B of the second load unit 102. However, when the first end 102A of the second load unit 102 is then lowered towards the vehicle 103 (by the hook system 123), and at the same the second end 102B of the second load unit 102 lifted, either the angle of the elongated body 110 changes and releases the elongated body 110, or the distance between the second end 102B of the second load unit 102 and the first end 110A of the elongated body 110 increases so that the first end 110A of the elongated body 110 cannot reach the second end 102B of the second load unit 102 anymore and thus gets released.

The braking device 108 comprises advantageously a resistance element 112 for resisting and braking a free movement of the first end 110A of the elongated body 110 around the hinge, and thus also brakes the free sliding movement of the first load unit 101 in relation to the second load unit 102. The resistance element 112 may be e.g. as a spring or cylinder, but is not limited to those only and can be implemented also by any other systems know by the skilled person of braking mechanisms. Advantageously the resistance element 112 is arranged between second arm 112 of the guiding device 105 of the and the elongated body 110.

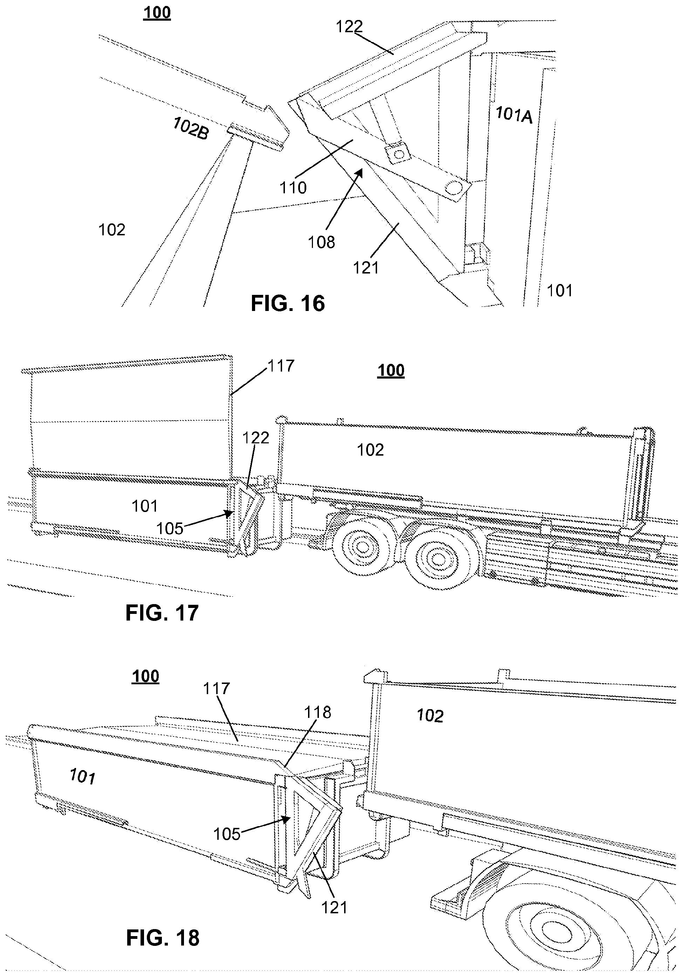

Figures 17-20 illustrate an exemplary load unit arrangement 100 with auxiliary devices, such as a cover 117. The cover 117 also comprises a wedge-shaped portion 118 in the upper portion of the first end 101A of the first load unit 101 in order to enable the sliding of the second load unit 102 (and in particularly the second end 102B of the second load unit 102) along the second arm 122 of the guiding device 105 and again along the wedge-shaped portion 118 of the cover 117 so that the second load unit 102 can be moved on the top of the cover 117. The cover 117, as well as also the upper portion of the first load unit 101, comprises a rail 119 wherein the second load unit 102 can slide. The cover 117 comprises advantageously also the stopping member 113 (not shown in the Figures).

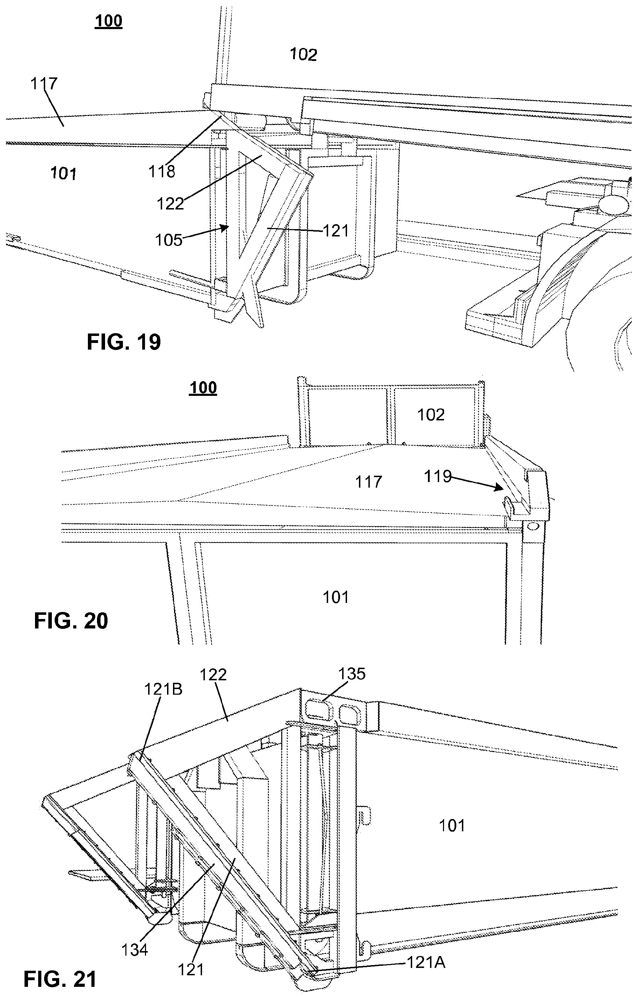

Figure 21 illustrates an exemplary load unit arrangement with the first arm 121, where said first arm comprises a braking element 134 between the first and second ends 121A, 121B of the first arm. The braking element 134 comprises advantageously a friction surface having rubber or the like and is advantageously arranged to be introduced to the second end 102B of the second load unit 102 during operation. The braking element 134 is advantageously used for braking the movement of the first load unit 101 in relation to said second load unit 102 especially during disconnection so when the first end 101A of the first load unit 101 has already meet the second end 102B of the second load unit 102 and is going to overpass the second end 102B and again to move into a lower level in relation to the second load unit 102. According to an exemplary embodiment the braking element 134 can be used instead of, or in addition to, the braking device 108.

In addition, it can be seen in Figure 21, that the load unit 101 may also comprise a lifting point 135, such as a hole, hook, groove or the like, in order to enable lifting the load unit e.g. by a crane. The load unit 101 may comprise e.g. number of lifting points 135 and they may locate for example in the upper corners of the load unit 101.

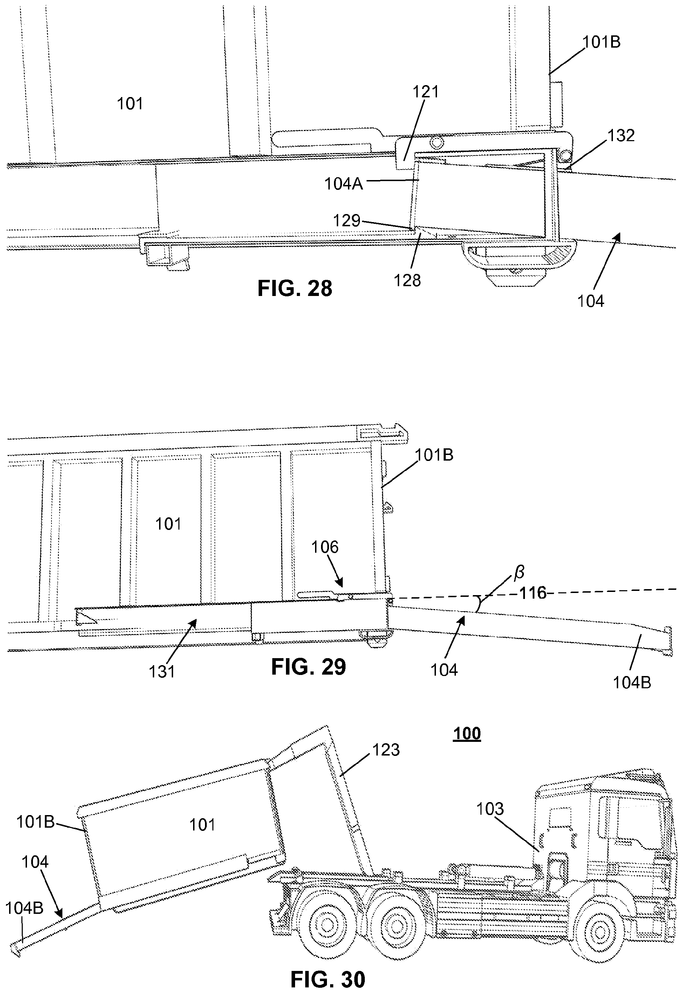

Figures 22-33 illustrate a principle of an exemplary load unit arrangement with a supporting device 104 for supporting the second end 101B of the first load unit 101 to the ground 114 or other supporting surface according to an advantageous embodiment of the invention. The arrangement comprises advantageously a locking device 106 for locking the supporting device 104 to the open or closed positions, where the locking device 106 comprises a latch or the like 106A and a corresponding receiving member 106B, such as hole or cavity or edge or the like 106B so that the latch 106A is coupled or mechanically fixed advantageously via a hinge 125 to the second end 101B of the first load unit 101 and the corresponding receiving member 106B is arranged into the supporting device 104. The supporting device 104 may comprise number of the corresponding receiving members 106B, for example one in the area of the second end 104B of the supporting device 104 so to lock the supporting device 104 in the closed position (when the latch is introduced with said corresponding receiving members 106B; as can be seen in Figure 22 "closed position") and one in the area of the first end 104A of the supporting device 104 so to lock the supporting device 104 in the open position, respectively (as can be seen in Figure 28; "open position").

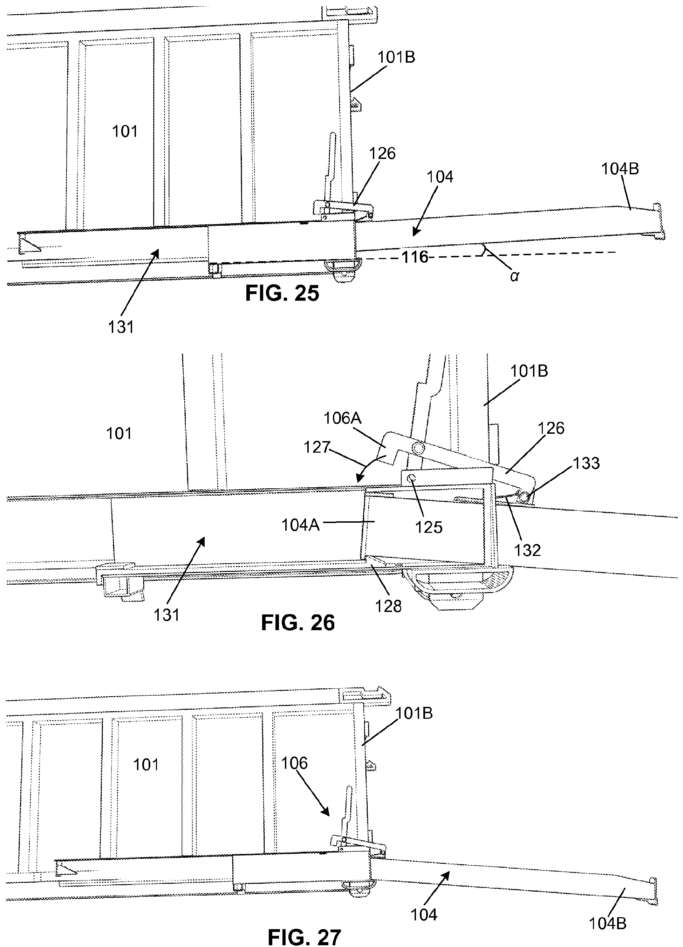

In Figure 22 the latch 106A together with the corresponding receiving member 106B (hole) of the locking mechanism 106 locks the supporting device 104 to the closed position. In Figure 23 the latch 106A is removed away from the receiving member 106B (hole) and the locking of the supporting device 104 is opened so that the supporting device 104 can slide out from its case 131 the second end 101B of the first load unit 101, as is the case e.g. in Figures 24 and 25.

According to an embodiment the dimensions of the case 131 and the supporting device 104 are so that especially the second end 104B of the supporting device 104 can be turned an angle up (up angle *α*) and an angle down (down angle *β*) from the line of the longitudinal axis 116, as can be seen for example in Figures 25 and 27.

In addition, the locking device 106 comprises a slide 132, which is coupled advantageously via a hinge 133 to a member 126 connecting said slide and the latch 106A. When the supporting device 104 is pulled out (see e.g. Figures 26, 27, 28), the supporting device 104 can be locked into the open position by turning the latch 106A (see arrow 127) to the corresponding receiving member 106B so that the latch 106A is mechanically meets the first end 104A of the supporting device 104, said first end 104A of the supporting device 104 functioning as said edge example of receiving members 106B. At the same, so when the latch 106A is moved (see arrow 127) towards the corresponding receiving member 106B, the slide 132 travels advantageously along the surface of the supporting device 104 towards the first end 104A of the supporting device 104, as can be seen in Figure 26 and 30. When the slide 132 travels towards the first end 104A of the supporting device 104, it at the same press the first end 104A of the supporting device 104 towards and against a stopping member 128 arranged into the second end 101B of the first load unit 101, or to the case 131. The stopping member 128 is configured to stop the movement of the supporting device 104 further out of the case 131 in the first direction 115 by meeting an edge projection 129 of the first end 104A of the supporting device 104.

Advantageously the locking mechanism 106 can in this manner lock the supporting device 104 into the open position in said down angle. The down angle can be adjusted by the dimensions of the case 131 and supporting device 104, as well as the positions of the slide 132, stopping member 128 and/or the edge projection 129 of the first end 104A of the supporting device 104. However, according to an embodiment the down angle (*β*) may be in the range of 10° - 60°, advantageously in the range of 20° - 45° or 20° - 30°, for example, depending on the needs. When the supporting device 104 can be locked into the open position in said down angle (*β*), the supporting device 104 can be made much shorter, which is clear advantage for example in narrow spaces, such as in city center areas. This can be seen clearly e.g. in Figure 30, where the load unit 102 can be unloaded away from the vehicle 103 in narrower space than if the down angle (*β*) was zero, i.e. the supporting device 104 was parallel with the longitudinal axis 116 of the load unit. In addition, when the down angle (*β*) is in the range of 10° - 60°, advantageously in the range of 20° - 45°, for example, there is then no need to skip up the load unit 102 as high or as steep angle, because, according to the invention and with the down angle (*β*), the second end 104B of the supporting device 104 hits the ground or other supporting surface earlier.

In addition, also the up angle α is advantageously up to 60°, advantageously at least 10°, more advantageously at least 30° or 45°, for example. This up angle can be advantageously achieved, when the locking mechanism 106 is opened.

In addition, it is to be noted that when the supporting device 104 is turned and locked into the down angle (*β*) in said open position, the second end 101B of the first load unit 101 can be easily pushed over the lower first load unit 101 even if there is an overload in said first load unit 101 (so that the upper surface of the overload would be in a higher level than the upper surface of the first load unit). Due to the down angle (*β*) the bottom portions of the second load unit 102 travel higher level than the upper level of the first load unit 101 or even the level (typically upper surface of the first load unit 101) where the second end 104B of the supporting device 104 during connecting the load units 101, 102.

When the load unit 102 lies on the ground or other supporting surface and the supporting device 104 is in open position (pulled out) and the locking is opened (as is the case in Figure 25), the slide 132 travels away from the first end 104A of the supporting device 104 and also releases the first and 104A of the supporting device 104 from the stopping member 128 and, due to the dimensions of the case 131 and the supporting device 104, the second end 104B of the supporting device 104 can be turned into the up angle (α). This offers advantages, namely if there is for example paving or other hump beneath the second end 104B of the supporting device 104, by turning the second end 104B of the supporting device 104 towards said up angle (α), the second end 104B of the supporting device 104 can be get away from the paving or other hump.

In addition, it is to be noted that the second end 104B of the supporting device 104 may advantageously have a wedge shape, whereupon in the closed position of the supporting device 104 the slide 132 has enough space, when the locking mechanism 106 is closed, so the latch 106A is moved into the corresponding receiving member 106B, as is the case in Figure 22.

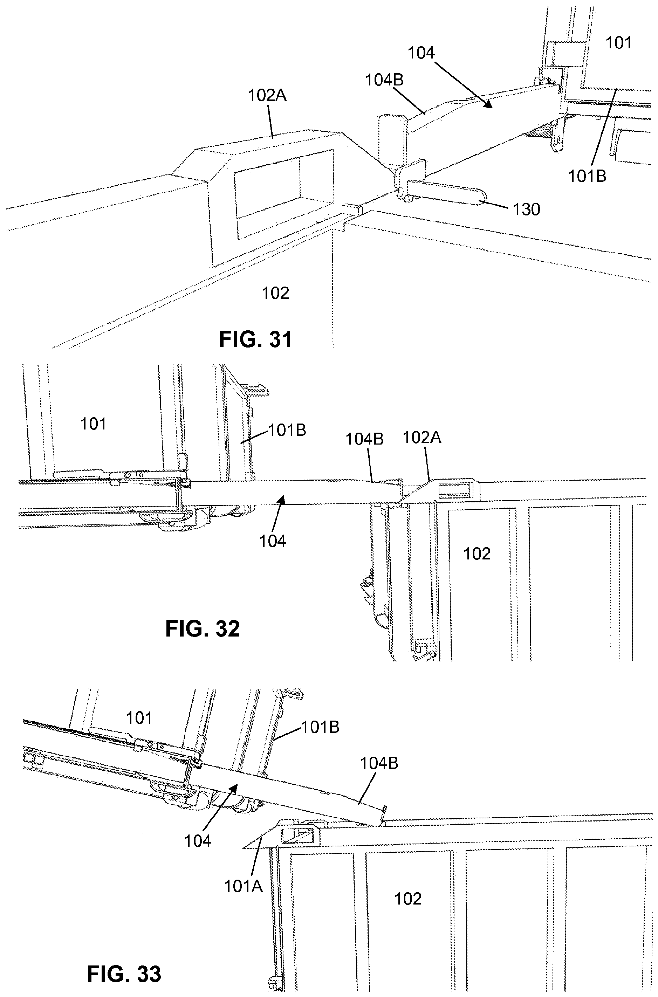

Still, the second end 104B of the supporting device 104 may have sharp edge portion 130, so that when the supporting device 104 is supported against the ground 114, it will keep the supporting device 104 tightly and so that it will not slip, whereas the sharp edge portion 130 can be turned aside, as is the case in Figure 31, whereupon the second end 104B of the supporting device 104 can slide more easily along the guiding device 105 (not shown in Figures 31-33) and again the upper portion of the second load unit 102.

Furthermore, it is to be noted that according to an embodiment the supporting device 104 can be removable / detachable so that the arrangement is configured to receive said supporting device 104 to the connection with the first load unit 101, advantageously with the second end 101B of the first load unit 101. For example, the second end 101B of the first load unit 101 may comprise suitable receiving slot or the like to receive said supporting device 104 for the connecting and/or disconnecting operations of the load units or for guiding the second load unit to the ground, as is described elsewhere in this document.

Advantageously according to an example, the supporting device 104 may be coupled to the first load unit 101 in a detachable manner so that the first end 104A of the supporting device 104 is coupled with the second end 101B of the first load unit 101 and that the second end 104B of the supporting device 104 is protruded from the second end 101B of the first load unit 101 during use, and thereby for example supporting or guiding the second end 101B of the first load unit 101 to a ground 114 or other supporting surface 114, for disconnecting the load units or disconnecting the first load unit away from the vehicle 103 (see e.g. Figure 30). Additionally, the supporting device 104 can be supported to a upper portion of the second load unit 102 during connecting the load units 101, 102, and thereby allowing the mutual movement of the first and second load units 101, 102 in said first direction 115, or supporting the supporting device 104 to the ground 114 during loading or dragging the load unit onto the vehicle (see e.g. Figures 31-33).

It is to be noted that in addition to the disclosure and examples, the load units may also have guiding rails for guiding the sliding of the load units in relation to each other in the first longitudinal direction. In addition, it is to be noted that even if the guiding device 105 is illustrated only in connection with the first load unit 101, also the second load unit 102 advantageously comprises the guiding device 105 in the first end 102A of it. Advantageously all the load units can be provided with the guiding device 105 in their first ends, whereupon the connecting and disconnecting of the load units are freely, easy and universal.

The features recited in dependent claims are mutually freely combinable unless otherwise explicitly stated.

## Claims

1. A load unit arrangement (100) having first (101) and second (102) load units to be carried by a vehicle (103), both of said load units having first and second ends (101A, 101B, 102A, 102B) and wherein the load units (101, 102) are configured to move in relation to each other in a first direction (115) to connect and disconnect the load units, said first direction being essentially parallel with a longitudinal axis (116) of the load units, wherein
the arrangement comprises a guiding device (105) arranged between the first end (101A) of the first load unit (101) and the second end (102B) of the second load unit (102) and arranged for
- lifting and guiding the second end (102B) of the second load unit (102) over the first end (101A) of the first load unit (101) in order to connect the load units (101, 102), and
- lowering and guiding the first end (101A) of the first load unit (101) in relation to the second end (102B) of the second load unit (102) in order to disconnect the load units (101, 102),
wherein
the guiding device (105) comprises
- a first arm (121) with first and second ends (121A, 121B) for lowering the first end (101A) of the first load unit (101), and
- a second arm (122) with first and second ends (122A, 122B) for lifting and guiding the second end (102B) of the second load unit (102), wherein whereupon
- the first arm (121) is in a first angle in relation to the longitudinal axis (116) of the first load unit (101) and configured to move against the second end (102B) of the second load unit (102) when the first end (101A) of the first load unit (101) has met said second end (102B) of the second load unit (102) and thereby to lowering the first end (101A) of the first load unit (101) in relation to the second end (102B) of the second load unit (102) in order to disconnect the load units (101, 102), and
- the second arm (122) is in a second angle in relation to the longitudinal axis (116) of the first load unit (101) and configured to enable the second end (102B) of the second load unit (102) to move along said second arm (122) when the second end (102B) of the second load unit (102) has met said first end (101A) of the first load unit (101) and thereby lifting and guiding the second end (102B) of the second load unit (102) over the first end (101A) of the first load unit (101) in order to connect the load units (101, 102)
wherein
- the second ends (121B, 122B) of the first and second arms (121, 122) are connected to each other,
- the first end (121A) of the first arm (121) is coupled to a lower portion of the first load unit (101), and
the first end (122A) of the second arm (122) is coupled to an upper portion of the first load unit (101).

2. A load unit arrangement of claim 1, wherein the guiding device (105) is coupled to the first end (101A) of the first load unit (101) pivotally via a hinge (107), wherein the guiding device (105) is arranged to be turned around the hinge (107) between first and second positions, wherein in said second position the guiding device (105) is configured to enable said connecting and disconnecting of said load units (101, 102).

3. A load unit arrangement of any previous claims, wherein the arrangement comprises a locking mechanism (109) for locking the guiding device (105) into the first and/or second positions.

4. A load unit arrangement of any previous claims, wherein the guiding device (105) comprises a braking device (108), said braking device (108) comprising an elongated body (110) having first and second ends (110A, 110B), said first end (110A) being a free end and is configured to be supported to the second end portion (102B) of the second load unit (102) when the first end (101A) of the first load unit (101) meets the second end (102B) of the second load unit (102) during disconnecting and thereby braking the moving of the first load unit (101) in relation to said second load unit (102).

5. A load unit arrangement of claim 4, wherein said second end (110B) of the elongated body (110) is pivoted via a hinge and thereby allowing the lowering of the first end (101A) of the first load unit (101) in relation to the second end (102B) of the second load unit (102) in order to disconnect the load units (101, 102), when the first end (101A) of the first load unit (101) meets the second end (102B) of the second load unit (102).

6. A load unit arrangement of any of claims 4-5, wherein the braking device (108) is configured to allow a turning of the first end (110A) of the elongated body (110) around said hinge in a braking manner and thereby braking the moving of the first load unit (101) in relation to said second load unit (102).

7. A load unit arrangement of any of claims 4-6, wherein said first end (110A) of the elongated body (110) is configured to extend over the first arm (121) so to be supported to the second end (102B) of the second load unit (102) when the first end (101A) of the first load unit (101) meets and overpasses the second end (102B) of the second load unit (102) during disconnecting and when the first arm (121) is supported in slidable manner against the second end (102B) of the second load unit (102).

8. A load unit arrangement of any of claims 4-7, wherein said first end (110A) of the elongated body (110) is configured to be released from the second end (102B) of the second load unit (102) when the first end (101A) of the first load unit (101) has overpassed the second end (102B) of the second load unit (102) and the second end of the elongated body is turned around the hinge over a threshold angle during lowering the first end (101A) of the first load unit (101) in relation to the second end (102B) of the second load unit (102).

9. A load unit arrangement of any of claims 4-8, wherein said braking device (108) comprises a resistance element (112), such as a spring or cylinder, for resisting and braking a free movement of the first end (110A) of the elongated body (110) around the hinge.

10. A load unit arrangement of any of claims 5-9, wherein the resistance element (112) is arranged between said second arm (122) of the guiding device (105) of the and the elongated body (110).

11. A load unit arrangement of any of claims 5-10, wherein said first end (121A) of the first arm (121) and said first end (122A) of the second arm (122) is connected with a connecting element (120), and said second end (110B) of the elongated body (110) is pivoted via the hinge to said connecting element (120).

12. A load unit arrangement of any previous claims, wherein the arrangement comprises a stopping arrangement (113), which is configured to prevent the mutual movement of the first and second load units (101, 102) in said first direction (115), when the longitudinal axis (116A, 116B) of the first and second load units are essentially parallel and the second ends (101B, 102B) of the load units are on top of each other.

13. A load unit arrangement of claim 12, wherein the stopping arrangement (113) comprises a first and second protrusion members (113A, 113B), where the first protrusion member (113A) is arranged to the second end (101B) of the first load unit (101) and the second protrusion member (113B) is arranged to the second end (102B) of the second load unit (102) so that said first and second protrusion members (113A, 113B) are configured to be introduced with each other when the longitudinal axis (116A, 116B) of the first and second load units are essentially parallel.

14. A load unit arrangement of any of claims 12-13, wherein the stopping arrangement (113) is configured to allow said first and second protrusion members (113A, 113B) to overtake each other and thus the mutual movement of the load units (101, 102) in said first direction (115), when the mutual angle (116C) of the longitudinal axis (116A, 116B) of said first and second load units (101, 102) is equal or greater than a first threshold angle (116C).

15. A load unit arrangement of any previous claims, wherein the first arm (121) comprises a braking element (134), such as a friction surface having rubber or the like, between the first and second ends (121A, 121B) of the first arm, said braking element (134) arranged to be introduced to the second end (102B) of the second load unit (102) during operation.

16. A load unit arrangement (100) of any of previous claims, wherein the arrangement comprises a supporting device (104) and wherein the supporting device (104) is an elongated supporting device comprising first and second ends (104A, 104B), and wherein said supporting device (104) is coupled to the first load unit (101) so that second end (104B) of the supporting device (104) is configured to be protruded from the second end (101B) of the first load unit (101) and supporting the second end (101B) of the first load unit (101) to a ground (114) or other supporting surface (114) for disconnecting, and thereby allowing the mutual movement of the first and second load units (101, 102) in said first direction (115),

17. A load unit arrangement (100) of claim 16, wherein the arrangement comprises a first locking mechanism (106) for locking the supporting device (104) to open or closed positions, wherein said locking mechanism comprises for example a pin or latch (106A) and hole (106B) arrangement.

18. A load unit arrangement of any previous claims, wherein the arrangement comprises a cover (117) arranged on the top of the first load unit (101), said cover comprising a wedge-shaped portion (118) in the upper portion of the first end (101A) of the first load unit (101) in order to enable the sliding of the second load unit (102), and in particularly the second end (102B) of the second load unit (102) along the second arm (122) of the guiding device (105) and again along the wedge-shaped portion (118) of the cover (117) to the top of the cover (117).

19. A method for disconnecting first (101) and second (102) load units of a load unit arrangement (100) to be carried by a vehicle (103), both of said load units having first and second ends (101A, 101B, 102A, 102B), wherein the load units (101, 102) are moved in relation to each other in a first direction (115) to connect and disconnect the load units, said first direction being essentially parallel with a longitudinal axis (116) of the load units, wherein
a guiding device (105) is arranged between the first end (101A) of the first load unit (101) and the second end (102B) of the second load unit (102) and is used for
- lifting and guiding the second end (102B) of the second load unit (102) over the first end (101A) of the first load unit (101) in order to connect the load units (101, 102), and
- lowering and guiding the first end (101A) of the first load unit (101) in relation to the second end (102B) of the second load unit (102) in order to disconnect the load units (101, 102),
wherein
the guiding device (105) comprises
- a first arm (121) with first and second ends (121A, 121B) which is used for lowering the first end (101A) of the first load unit (101), and,
- a second arm (122) with first and second ends (122A, 122B) which is used for lifting and guiding the second end (102B) of the second load unit (102),
wherein
- the first arm (121) is in a first angle in relation to the longitudinal axis **(116) of** the first load unit (101) and moves (*slide*) against the second end (102B) of the second load unit (102) when the first end (101A) of the first load unit (101) meets said second end (102B) of the second load unit (102) and thereby lowers the first end (101A) of the first load unit (101) in relation to the second end (102B) of the second load unit (102) and disconnects the load units (101, 102), and
- the second arm (122) is in a second angle in relation to the longitudinal axis (116) of the first load unit (101) and enables the second end (102B) of the second load unit (102) to move (*slide*) along said second arm (122) when the second end (102B) of the second load unit (102) meets said first end (101A) of the first load unit (101) and thereby lifts and guides the second end (102B) of the second load unit (102) over the first end (101A) of the first load unit (101) in order to connect the load units (101, 102), and
wherein
- the second ends (121B, 122B) of the first and second arms (121, 122) are connected to each other,
- the first end (121A) of the first arm (121) is coupled to a lower portion of the first load unit (101), and
the first end (122A) of the second arm (122) is coupled to an upper portion of the first load unit (101).

## Patentansprüche

1. Ladeeinheitsanordnung (100) mit einer ersten (101) und einer zweiten (102) Ladeeinheit, die von einem Fahrzeug (103) zu tragen sind, wobei die beiden Ladeeinheiten erste und zweite Enden (101A, 101B, 102A, 102B) aufweisen und die Ladeeinheiten (101, 102) konfiguriert sind, sich relativ zueinander in einer ersten Richtung (115) zu bewegen, um die Ladeeinheiten zu verbinden und trennen, wobei die erste Richtung im Wesentlichen parallel zu einer Längsachse (116) der Ladeeinheiten ist, wobei
die Anordnung eine Führungsvorrichtung (105) umfasst, die zwischen dem ersten Ende (101A) der ersten Ladeeinheit (101) und dem zweiten Ende (102B) der zweiten Ladeeinheit (102) angeordnet ist und dazu eingerichtet ist,
das zweite Ende (102B) der zweiten Ladeeinheit (102) über das erste Ende (101A) der ersten Ladeeinheit (101) anzuheben und führen, um die Ladeeinheiten (101, 102) zu verbinden, und
das erste Ende (101A) der ersten Ladeeinheit (101) relativ zum zweiten Ende (102B) der zweiten Ladeeinheit (102) abzusenken und zu führen, um die Ladeeinheiten (101, 102) zu trennen,
wobei
die Führungsvorrichtung(105):
einen erstem Arm (121) mit einem ersten und einem zweiten Ende (121A, 121B) zum Absenken des ersten Endes (101A) der ersten Ladeeinheit (101), und
einen zweiten Arm (122) mit einem ersten und einem zweiten Ende (122A, 122B) zum Anheben und Führen des zweiten Endes (102B) der zweiten Ladeeinheit (102) umfasst, wonach
der erste Arm (121) in einem ersten Winkel relativ zur Längsachse (116) der ersten Ladeeinheit (101) liegt und konfiguriert ist, sich gegen das zweite Ende (102B) der zweiten Ladeeinheit (102) zu bewegen, wenn das erste Ende (101A) der ersten Ladeeinheit (101) das zweite Ende (102B) der zweiten Ladeeinheit (102) getroffen hat, und damit das erste Ende (101A) der ersten Ladeeinheit (101) relativ zum zweiten Ende (102B) der zweiten Ladeeinheit (102) absenkt, um die Ladeeinheiten (101, 102) zu trennen, und
der zweite Arm (122) in einem zweiten Winkel relativ zur Längsachse (116) der ersten Ladeeinheit (101) liegt und konfiguriert ist, zu ermöglichen, dass sich das zweite Ende (102B) der zweiten Ladeeinheit (102) entlang des zweiten Arms (122) bewegt, wenn das zweite Ende (102B) der zweiten Ladeeinheit (102) das erste Ende (101A) der ersten Ladeeinheit (101) getroffen hat, und damit das zweite Ende (102B) der zweiten Ladeeinheit (102) über das erste Ende (101A) der ersten Ladeeinheit (101) anhebt und führt, um die Ladeeinheiten (101, 102) zu verbinden,
wobei
die zweiten Enden (121B, 122B) des ersten und des zweiten Arms (121, 122) miteinander verbunden sind,
das erste Ende (121A) des ersten Arms (121) mit einem unteren Abschnitt der ersten Ladeeinheit (101) gekoppelt ist, und
das erste Ende (122A) des zweiten Arms (122) mit einem oberen Abschnitt der ersten Ladeeinheit (101) gekoppelt ist.

2. Ladeeinheitsanordnung nach Anspruch 1, wobei die Führungsvorrichtung (105) drehbar über ein Scharnier (107) mit dem ersten Ende (101A) der ersten Ladeeinheit (101) gekoppelt ist, wobei die Führungsvorrichtung (105) so eingerichtet ist, dass sie um das Scharnier (107) zwischen einer ersten und einer zweiten Stellung verdreht werden kann, wobei die Führungsvorrichtung(105) in der zweiten Stellung konfiguriert ist, das Verbinden und Trennen der Ladeeinheiten (101, 102) zu ermöglichen.

3. Ladeeinheitsanordnung nach einem der vorhergehenden Ansprüche, wobei die Anordnung einen Verriegelungsmechanismus (109) umfasst, um die Führungsvorrichtung (105) in der ersten und/oder zweiten Position zu verriegeln.

4. Ladeeinheitsanordnung nach einem der vorhergehenden Ansprüche, wobei die Führungsanordnung (105) eine Bremsvorrichtung (108) umfasst, wobei die Bremsvorrichtung (108) einen länglichen Körper (110) mit einem ersten und einem zweiten Ende (110A, 110B) umfasst, wobei das erste Ende (110A) ein freies Ende ist und so konfiguriert ist, dass es am zweiten Endabschnitt (102B) der zweiten Ladeeinheit (102) abgestützt wird, wenn das erste Ende (101A) der ersten Ladeeinheit (101) beim Trennen das zweite Ende (102B) der zweiten Ladeeinheit (102) trifft, und dadurch die Bewegung der ersten Ladeeinheit (101) relativ zur zweiten Ladeeinheit (102) bremst.

5. Ladeeinheitsanordnung nach Anspruch 4, wobei das zweite Ende (110B) des länglichen Körpers (110) über ein Scharnier drehbar gelagert ist und damit das Absenken des ersten Endes (101A) der ersten Ladeeinheit (101) relativ zum zweiten Ende (102B) der zweiten Ladeeinheit (102) ermöglicht, um die Ladeeinheiten (101, 102) zu trennen, wenn das erste Ende (101A) der ersten Ladeeinheit (101) das zweite Ende (102B) der zweiten Ladeeinheit (102) trifft.

6. Ladeeinheitsanordnung nach einem der Ansprüche 4-5, wobei die Bremsvorrichtung (108) so konfiguriert ist, dass sie ein Drehen des ersten Endes (110A) des länglichen Körpers (110) um das Scharnier auf bremsender Weise erlaubt und damit die Bewegung der ersten Ladeeinheit (101) relativ zur zweiten Ladeeinheit (102) abbremst.

7. Ladeeinheitsanordnung nach einem der Ansprüche 4-6, wobei das erste Ende (110A) des länglichen Körpers (110) so konfiguriert ist, dass es sich über den ersten Arm (121) erstreckt, um sich am zweiten Ende (102B) der zweiten Ladeeinheit (102) abzustützen, wenn das erste Ende (101A) der ersten Ladeeinheit (101) beim Trennen das zweite Ende (102B) der zweiten Ladeeinheit (102) trifft und überfährt und wenn der erste Arm (121) auf gleitender Weise gegen das zweite Ende (102B) der zweiten Ladeeinheit (102) abgestützt ist.

8. Ladeeinheitsanordnung nach einem der Ansprüche 4-7, wobei das erste Ende (110A) des länglichen Körpers (110) so konfiguriert ist, dass es vom zweiten Ende (102B) der zweiten Ladeeinheit (102) freigegeben wird, wenn das erste Ende (101A) der ersten Ladeeinheit (101) das zweite Ende (102B) der zweiten Ladeeinheit (102) überfahren hat und das zweite Ende des länglichen Körpers beim Absenken des ersten Endes (101A) der ersten Ladeeinheit (101) relativ zum zweiten Ende (102B) der zweiten Ladeeinheit (102) über einen Schwellenwinkel um das Scharnier verdreht wird.

9. Ladeeinheitsanordnung nach einem der Ansprüche 4-8, wobei die Bremsvorrichtung (108) ein Widerstandselement (112), wie eine Feder oder einen Zylinder, umfasst, um eine freie Bewegung des ersten Endes (110A) des länglichen Körpers (110) um das Scharnier zu widerstehen und abzubremsen.

10. Ladeeinheitsanordnung nach einem der Ansprüche 5-9, wobei das Widerstandselement (112) zwischen dem zweiten Arm (122) der Führungsvorrichtung (105) und dem länglichen Körper (110) angeordnet ist.

11. Ladeeinheitsanordnung nach einem der Ansprüche 5-10, wobei das erste Ende (121A) des ersten Arms (121) und das erste Ende (122A) des zweiten Arms (122) durch ein Verbindungselement (120) verbunden sind und das zweite Ende (110B) des länglichen Körpers (110) drehbar über das Scharnier an dem Verbindungselement (120) gelagert ist.

12. Ladeeinheitsanordnung nach einem der vorhergehenden Ansprüche, wobei die Anordnung eine Anhaltevorrichtung (113) umfasst, die konfiguriert ist, die gegenseitige Bewegung der ersten und zweiten Ladeeinheit (101, 102) in der ersten Richtung (115) zu verhindern, wenn die Längsachsen (116A, 116B) der ersten und zweiten Ladeeinheit im Wesentlichen parallel sind und die zweiten Enden (101B, 102B) der Ladeeinheiten übereinander liegen.

13. Ladeeinheitsanordnung nach Anspruch 12, wobei die Anhaltevorrichtung (113) erste und zweite Vorsprungselemente (113A, 113B) umfasst, wobei das erste Vorsprungselement (113A) am zweiten Ende (101B) der ersten Ladeeinheit (101) und das zweite Vorsprungselement (113B) am zweiten Ende (102B) der zweiten Ladeeinheit (102) angeordnet ist, so dass die ersten und zweiten Vorsprungselemente (113A, 113B) konfiguriert sind, um miteinander in Eingriff gebracht zu werden, wenn die Längsachsen (116A, 116B) der ersten und zweiten Ladeeinheit im Wesentlichen parallel sind.

14. Ladeeinheitsanordnung nach einem der Ansprüche 12-13, wobei die Anhaltevorrichtung (113) so konfiguriert ist, dass die ersten und zweiten Vorsprungselemente (113A, 113B) einander überholen dürfen und somit die gegenseitige Bewegung der Ladeeinheiten (101, 102) in der ersten Richtung (115) zulassen, wenn der gegenseitige Winkel (116C) der Längsachsen (116A, 116B) der ersten und zweiten Ladeeinheit (101, 102) gleich ist oder größer als ein erster Schwellenwinkel (116C).

15. Ladeeinheitsanordnung nach einem der vorhergehenden Ansprüche, wobei der erste Arm (121) ein Bremselement (134), wie eine Reibfläche aus Gummi oder dergleichen, zwischen den ersten und zweiten Enden (121A, 121B) des ersten Arms umfasst, wobei das Bremselement (134) so angeordnet ist, dass es während des Betriebs an das zweite Ende (102B) der zweiten Ladeeinheit (102) angelegt wird.

16. Ladeeinheitsanordnung (100) nach einem der vorhergehenden Ansprüche, wobei die Anordnung eine Abstützvorrichtung(104) umfasst und wobei die Abstützvorrichtung (104) eine längliche Abstützvorrichtung mit einem ersten und einem zweiten Ende (104A, 104B) ist, und wobei die Abstützvorrichtung(104) mit der ersten Ladeeinheit (101) so gekoppelt ist, dass das zweite Ende (104B) der Abstützvorrichtung (104) aus dem zweiten Ende (101B) der ersten Ladeeinheit (101) hervorsteht und das zweite Ende (101B) der ersten Ladeeinheit (101) auf einem Boden (114) oder einer anderen Tragfläche (114) abstützt, um zu trennen, und damit die gegenseitige Bewegung der ersten und zweiten Ladeeinheit (101, 102) in der ersten Richtung (115) ermöglichen.

17. Ladeeinheitsanordnung (100) nach Anspruch 16, wobei die Anordnung einen ersten Verriegelungsmechanismus (106) zum Verriegeln der Abstützvorrichtung (104) in einer offenen oder geschlossenen Stellung umfasst, wobei der Verriegelungsmechanismus beispielsweise eine Bolzen- oder Riegel- (106A) und Loch- (106B) Anordnung umfasst.

18. Ladeeinheitslanordnung nach einem der vorhergehenden Ansprüche, wobei die Anordnung eine Abdeckung (117) umfasst, die auf der Oberseite der ersten Ladeeinheit (101) angeordnet ist, wobei die Abdeckung einen keilförmigen Abschnitt (118) im oberen Abschnitt des ersten Endes (101A) der ersten Ladeeinheit (101) umfasst, um das Gleiten der zweiten Ladeeinheit (102), insbesondere des zweiten Endes (102B) der zweiten Ladeeinheit (102), entlang des zweiten Arms (122) der Führungsvorrichtung (105) und weiter entlang des keilförmigen Abschnitts (118) der Abdeckung (117) auf die Oberseite der Abdeckung (117) zu ermöglichen.

19. Verfahren zum Trennen einer ersten (101) und einer zweiten (102) Ladeeinheit einer Ladeeinheitsanordnung (100), die von einem Fahrzeug (103) zu tragen ist, wobei beide Ladeeinheiten erste und zweite Enden (101A, 101B, 102A, 102B) aufweisen, wobei die Ladeeinheiten (101, 102) relativ zueinander in einer ersten Richtung (115) bewegt werden, um die Ladeeinheiten zu verbinden und zu trennen, wobei die erste Richtung im Wesentlichen parallel zu einer Längsachse (116) der Ladeeinheiten ist,
wobei
eine Führungsvorrichtung (105) zwischen dem ersten Ende (101A) der ersten Ladeeinheit (101) und dem zweiten Ende (102B) der zweiten Ladeeinheit (102) angeordnet wird und wird verwendet zum
Anheben und Führen des zweiten Endes (102B) der zweiten Ladeeinheit (102) über das erste Ende (101A) der ersten Ladeeinheit (101), um die Ladeeinheiten (101, 102) zu verbinden, und zum
Absenken und Führen des ersten Endes (101A) der ersten Ladeeinheit (101) relativ zum zweiten Ende (102B) der zweiten Ladeeinheit (102), um die Ladeeinheiten (101, 102) zu trennen,
wobei
die Führungsvorrichtung(105):
einen ersten Arm (121) mit einem ersten und einem zweiten Ende (121A, 121B), der zum Absenken des ersten Endes (101A) der ersten Ladeeinheit (101) verwendet wird, und
einen zweiten Arm (122) mit einem ersten und einem zweiten Ende (122A, 122B), der zum Anheben und Führen des zweiten Endes (102B) der zweiten Ladeeinheit (102) verwendet wird, umfasst
wobei
der erste Arm (121) in einem ersten Winkel relativ zur Längsachse (116) der ersten Ladeeinheit (101) steht und gegen das zweite Ende (102B) der zweiten Ladeeinheit (102) bewegt (gleitet), wenn das erste Ende (101A) der ersten Ladeeinheit (101) das zweite Ende (102B) der zweiten Ladeeinheit (102) trifft, und damit das erste Ende (101A) der ersten Ladeeinheit (101) relativ zum zweiten Ende (102B) der zweiten Ladeeinheit (102) absenkt und die Ladeeinheiten (101, 102) trennt, und
der zweite Arm (122) in einem zweiten Winkel relativ zur Längsachse (116) der ersten Ladeeinheit (101) steht und ermöglicht, dass sich das zweite Ende (102B) der zweiten Ladeeinheit (102) entlang des zweiten Arms (122) bewegt (gleitet), wenn das zweite Ende (102B) der zweiten Ladeeinheit (102) das erste Ende (101A) der ersten Ladeeinheit (101) trifft, und damit das zweite Ende (102B) der zweiten Ladeeinheit (102) über das erste Ende (101A) der ersten Ladeeinheit (101) anhebt und führt, um die Ladeeinheiten (101, 102) zu verbinden, und wobei
die zweiten Enden (121B, 122B) des ersten und zweiten Arms (121, 122) miteinander verbunden sind,
das erste Ende (121A) des ersten Arms (121) mit einem unteren Abschnitt der ersten Ladeeinheit (101) gekoppelt ist, und
das erste Ende (122A) des zweiten Arms (122) mit einem oberen Abschnitt der ersten Ladeeinheit (101) gekoppelt ist.

## Revendications

1. Agencement d'unités de charge (100) comprenant une première (101) et une seconde (102) unité de charge destinées à être transportées par un véhicule (103), lesdites unités de charge comportant chacune des première et seconde extrémités (101A, 101B, 102A, 102B), les unités (101, 102) étant configurées pour se déplacer l'une par rapport à l'autre dans une première direction (115) afin de coupler et de découpler les unités, ladite première direction étant essentiellement parallèle à un axe longitudinal (116) des unités,
dans lequel
l'agencement comprend un dispositif de guidage (105) disposé entre la première extrémité (101A) de la première unité de charge (101) et la seconde extrémité (102B) de la seconde unité de charge (102) et agencé pour:
- soulever et guider la seconde extrémité (102B) de la seconde unité de charge (102) au-dessus de la première extrémité (101A) de la première unité de charge (101) afin de coupler les unités (101, 102), et
- abaisser et guider la première extrémité (101A) de la première unité de charge (101) par rapport à la seconde extrémité (102B) de la seconde unité de charge (102) afin de découpler les unités (101, 102),
dans lequel
le dispositif de guidage (105) comprend:
- un premier bras (121) ayant des première et seconde extrémités (121A, 121B) pour abaisser la première extrémité (101A) de la première unité de charge (101), et
- un second bras (122) ayant des première et seconde extrémités (122A, 122B) pour soulever et guider la seconde extrémité (102B) de la seconde unité de charge (102),
dans lequel
- le premier bras (121) est à un premier angle par rapport à l'axe longitudinal (116) de la première unité de charge (101) et est configuré pour se déplacer contre la seconde extrémité (102B) de la seconde unité de charge (102) lorsque la première extrémité (101A) de la première unité de charge (101) a rencontré ladite seconde extrémité (102B) de la seconde unité de charge (102), et abaisser ainsi la première extrémité (101A) de la première unité de charge (101) par rapport à la seconde extrémité (102B) de la seconde unité de charge (102) afin de découpler les unités (101, 102),
et
- le second bras (122) est à un second angle par rapport à l'axe longitudinal (116) de la première unité de charge (101) et est configuré pour permettre à la seconde extrémité (102B) de la seconde unité de charge (102) de se déplacer le long dudit second bras (122) lorsque la seconde extrémité (102B) de la seconde unité de charge (102) a rencontré ladite première extrémité (101A) de la première unité de charge (101), et soulever et guider ainsi la seconde extrémité (102B) de la seconde unité de charge (102) au-dessus de la première extrémité (101A) de la première unité de charge (101) afin de coupler les unités (101, 102),
dans lequel
- les secondes extrémités (121B, 122B) des premier et second bras (121, 122) sont reliées entre elles,
- la première extrémité (121A) du premier bras (121) est couplée à une portion inférieure de la première unité de charge (101), et
la première extrémité (122A) du second bras (122) est couplée à une portion supérieure de la première unité de charge (101).

2. Agencement selon la revendication 1, dans lequel le dispositif de guidage (105) est couplé à la première extrémité (101A) de la première unité de charge (101) de manière articulée via une charnière (107), le dispositif de guidage (105) étant agencé pour être pivoté autour de la charnière (107) entre une première et une seconde position, la seconde position configurant le dispositif de guidage (105) pour permettre le couplage et le découplage desdites unités (101, 102).

3. Agencement selon l'une des revendications précédentes, dans lequel l'agencement comprend un mécanisme de verrouillage (109) pour verrouiller le dispositif de guidage (105) en première et/ou seconde position.

4. Agencement selon l'une des revendications précédentes, dans lequel le dispositif de guidage (105) comprend un dispositif de freinage (108), ledit dispositif de freinage (108) comprenant un corps allongé (110) ayant des première et seconde extrémités (110A, 110B), la première extrémité (110A) étant une extrémité libre configurée pour s'appuyer sur la portion d'extrémité arrière (102B) de la seconde unité de charge (102) lorsque la première extrémité (101A) de la première unité de charge (101) rencontre la seconde extrémité (102B) de la seconde unité de charge (102) lors du découplage, freinant ainsi le déplacement de la première unité de charge (101) par rapport à ladite seconde unité de charge (102).

5. Agencement selon la revendication 4, dans lequel la seconde extrémité (110B) du corps allongé (110) est articulée via une charnière, permettant ainsi l'abaissement de la première extrémité (101A) de la première unité de charge (101) par rapport à la seconde extrémité (102B) de la seconde unité de charge (102) afin de découpler les unités (101, 102), lorsque la première extrémité (101A) de la première unité de charge (101) rencontre la seconde extrémité (102B) de la seconde unité de charge (102).

6. Agencement selon l'une des revendications 4-5, dans lequel le dispositif de freinage (108) est configuré pour permettre une rotation de la première extrémité (110A) du corps allongé (110) autour de ladite charnière d'une manière freinante, freinant ainsi le déplacement de la première unité de charge (101) par rapport à ladite seconde unité de charge (102).

7. Agencement selon l'une des revendications 4-6, dans lequel la première extrémité (110A) du corps allongé (110) est configurée pour s'étendre au-dessus du premier bras (121) afin de venir en appui sur la seconde extrémité (102B) de la seconde unité de charge (102) lorsque la première extrémité (101A) de la première unité de charge (101) rencontre et dépasse la seconde extrémité (102B) de la seconde unité de charge (102) lors du découplage, et lorsque le premier bras (121) est soutenu de manière coulissante contre la seconde extrémité (102B) de la seconde unité de charge (102).

8. Agencement selon l'une des revendications 4-7, dans lequel la première extrémité (110A) du corps allongé (110) est configurée pour être libérée de la seconde extrémité (102B) de la seconde unité de charge (102) lorsque la première extrémité (101A) de la première unité de charge (101) a dépassé la seconde extrémité (102B) de la seconde unité de charge (102) et que la seconde extrémité du corps allongé est pivotée autour de la charnière au-delà d'un angle seuil lors de l'abaissement de la première extrémité (101A) de la première unité de charge (101) par rapport à la seconde extrémité (102B) de la seconde unité de charge (102).

9. Agencement selon l'une des revendications 4-8, dans lequel le dispositif de freinage (108) comprend un élément de résistance (112), tel qu'un ressort ou un vérin, pour s'opposer et freiner un mouvement libre de la première extrémité (110A) du corps allongé (110) autour de la charnière.

10. Agencement selon l'une des revendications 5-9, dans lequel l'élément de résistance (112) est disposé entre le second bras (122) du dispositif de guidage (105) et le corps allongé (110).

11. Agencement selon l'une des revendications 5-10, dans lequel la première extrémité (121A) du premier bras (121) et la première extrémité (122A) du second bras (122) sont reliées par un élément de liaison (120), et dans lequel la seconde extrémité (110B) du corps allongé (110) est articulée via la charnière audit élément de liaison (120).

12. Agencement selon l'une des revendications précédentes, dans lequel l'agencement comprend un dispositif d'arrêt (113) configuré pour empêcher le mouvement mutuel des première et seconde unités de charge (101, 102) dans ladite première direction (115) lorsque les axes longitudinaux (116A, 116B) des première et seconde unités de charge sont essentiellement parallèles et que les secondes extrémités (101B, 102B) des unités de charge sont l'une au-dessus de l'autre.

13. Agencement selon la revendication 12, dans lequel le dispositif d'arrêt (113) comprend des premier et second éléments en saillie (113A, 113B), le premier élément en saillie (113A) étant disposé à la seconde extrémité (101B) de la première unité de charge (101) et le second élément en saillie (113B) étant disposé à la seconde extrémité (102B) de la seconde unité de charge (102), de manière à ce que lesdits premier et second éléments en saillie (113A, 113B) soient configurés pour entrer en prise l'un avec l'autre lorsque les axes longitudinaux (116A, 116B) des première et seconde unités de charge sont essentiellement parallèles.

14. Agencement selon l'une des revendications 12-13, dans lequel le dispositif d'arrêt (113) est configuré pour permettre auxdits premier et second éléments en saillie (113A, 113B) de se dépasser mutuellement et ainsi autoriser le mouvement mutuel des unités de charge (101, 102) dans ladite première direction (115) lorsque l'angle mutuel (116C) des axes longitudinaux (116A, 116B) desdites première et seconde unités de charge (101, 102) est égal ou supérieur à un premier angle seuil (116C).

15. Agencement selon l'une des revendications précédentes, dans lequel le premier bras (121) comprend un élément de freinage (134), tel qu'une surface de friction en caoutchouc ou similaire, entre les première et seconde extrémités (121A, 121B) du premier bras, ledit élément de freinage (134) étant agencé pour être appliqué à la seconde extrémité (102B) de la seconde unité de charge (102) durant le fonctionnement.

16. Agencement d'unités de charge (100) selon l'une des revendications précédentes, dans lequel l'agencement comprend un dispositif de support (104) et dans lequel le dispositif de support (104) est un dispositif de support allongé comprenant des première et seconde extrémités (104A, 104B), ledit dispositif de support (104) étant couplé à la première unité de charge (101) de sorte que la seconde extrémité (104B) du dispositif de support (104) soit configurée pour faire saillie depuis la seconde extrémité (101B) de la première unité de charge (101) et supporter la seconde extrémité (101B) de la première unité de charge (101) sur un sol (114) ou une autre surface de support (114) pour le découplage, permettant ainsi le mouvement mutuel des première et seconde unités de charge (101, 102) dans ladite première direction (115).

17. Agencement d'unités de charge (100) selon la revendication 16, dans lequel l'agencement comprend un premier mécanisme de verrouillage (106) pour verrouiller le dispositif de support (104) en positions ouverte ou fermée, ledit mécanisme de verrouillage comprenant par exemple un agencement goupille ou loquet (106A) et trou (106B).

18. Agencement selon l'une des revendications précédentes, dans lequel l'agencement comprend un couvercle (117) disposé sur la partie supérieure de la première unité de charge (101), ledit couvercle comprenant une portion en forme de cale (118) dans la partie supérieure de la première extrémité (101A) de la première unité de charge (101) afin de permettre le glissement de la seconde unité de charge (102), et en particulier de la seconde extrémité (102B) de la seconde unité de charge (102), le long du second bras (122) du dispositif de guidage (105) puis le long de la portion en forme de cale (118) du couvercle (117) vers la partie supérieure du couvercle (117).

19. Procédé de découplage des première (101) et seconde (102) unités de charge d'un agencement d'unités de charge (100) destiné à être transporté par un véhicule (103), lesdites unités de charge comportant chacune des première et seconde extrémités (101A, 101B, 102A, 102B), les unités (101, 102) étant déplacées l'une par rapport à l'autre dans une première direction (115) afin de coupler et de découpler les unités, ladite première direction étant essentiellement parallèle à un axe longitudinal (116) des unités,
dans lequel
un dispositif de guidage (105) est disposé entre la première extrémité (101A) de la première unité de charge (101) et la seconde extrémité (102B) de la seconde unité de charge (102) et est utilisé pour:
- soulever et guider la seconde extrémité (102B) de la seconde unité de charge (102) au-dessus de la première extrémité (101A) de la première unité de charge (101) afin de coupler les unités (101, 102), et
- abaisser et guider la première extrémité (101A) de la première unité de charge (101) par rapport à la seconde extrémité (102B) de la seconde unité de charge (102) afin de découpler les unités (101, 102),
dans lequel
le dispositif de guidage (105) comprend:
- un premier bras (121) ayant des première et seconde extrémités (121A, 121B), utilisé pour abaisser la première extrémité (101A) de la première unité de charge (101), et
- un second bras (122) ayant des première et seconde extrémités (122A, 122B), utilisé pour soulever et guider la seconde extrémité (102B) de la seconde unité de charge (102),
dans lequel
- le premier bras (121) est à un premier angle par rapport à l'axe longitudinal (116) de la première unité de charge (101) et se déplace (glisse) contre la seconde extrémité (102B) de la seconde unité de charge (102) lorsque la première extrémité (101A) de la première unité de charge (101) rencontre ladite seconde extrémité (102B) de la seconde unité de charge (102), et abaisse ainsi la première extrémité (101A) de la première unité de charge (101) par rapport à la seconde extrémité (102B) de la seconde unité de charge (102) et découple les unités (101, 102), et
- le second bras (122) est à un second angle par rapport à l'axe longitudinal (116) de la première unité de charge (101) et permet à la seconde extrémité (102B) de la seconde unité de charge (102) de se déplacer (glisser) le long dudit second bras (122) lorsque la seconde extrémité (102B) de la seconde unité de charge (102) rencontre ladite première extrémité (101A) de la première unité de charge (101), et soulève et guide ainsi la seconde extrémité (102B) de la seconde unité de charge (102) au-dessus de la première extrémité (101A) de la première unité de charge (101) afin de coupler les unités (101, 102), et
dans lequel
- les secondes extrémités (121B, 122B) des premier et second bras (121, 122) sont reliées entre elles,
- la première extrémité (121A) du premier bras (121) est couplée à une portion inférieure de la première unité de charge (101), et
la première extrémité (122A) du second bras (122) est couplée à une portion supérieure de la première unité de charge (101).
